# EUROPEAN PATENT APPLICATION

(11) **EP 3 725 664 A1**
(43) Date of publication of application: **21.10.2020**
(21) Application number: 19382301.0
(22) Date of filing: 17.04.2019
(51) Int. Cl.: B63B 21/20, B63B 21/50, F16G 15/06, B63C 11/52

(54) **ASSEMBLY FOR THE QUICK CONNECTION-DISCONNECTION OF A FIRST CHAIN AND A SECOND CHAIN VERTICALLY UNDER WATER**

(71) Applicant: Vicinay Cadenas S.A., 48014 Bilbao (ES)
(72) Inventor: ABRISKETA LOZANO, Nagore, 48940 LEIOA (ES); FERNANDEZ IBAÑEZ, Jonatan, 48940 LEIOA (ES); ALTUZARRA MAESTRE, Jorge, 48940 LEIOA (ES); MENA CORMENZANA, Alexander, 48940 LEIOA (ES)
(74) Representative: Igartua, Ismael

(57) **Abstract**

Assembly for the connection-disconnection of a first chain (100) and a second chain (200), comprising a support (10) for the end of the first chain (100), an H-shaped shackle (210) coupled to the second chain (200) which is coupled to the end of the first chain (100) in a connecting position. The shackle (210) comprises side walls (213, 214) with facing holes, the end of the first chain (100) being arranged between the holes in the connecting position, and fixing means for coupling the shackle (210) and the end of the first chain (100). The fixing means comprise a connector (240) going through the holes and the end of the first chain (100) in the connecting position, and closure means (250) for blocking the connector (240). The fixing means are incorporated in the shackle (210) and transported by said shackle (210).

## Description

### TECHNICAL FIELD

The present invention relates to assemblies for the quick connection-disconnection of a first chain and a second chain vertically underwater.

### PRIOR ART

Drillships or offshore platforms have to be moored to the seabed in a given fixed area, so as to not be subjected to the displacements that may be caused by sea currents or atmospheric conditions. Anchoring devices which are moored to mooring lines that are attached to said ships or platforms are used. These anchoring devices can be anchors or piles that are driven into the seabed, usually incorporating a chain segment, with one of the ends of said chain being attached to the anchoring device and the other end of the chain having to be attached to the mooring line launched from the surface of the water, said mooring line being formed by at least one chain segment. Different connection assemblies and methods are known for attaching the two chains under water.

EP2955096A1 describes an assembly for mooring a first chain and a second chain vertically under water, the assembly comprising a support arranged under water supporting an end of the first chain, an H-shaped shackle in which one end of the second chain is coupled, the shackle being configured for being introduced under water together with the end of the second chain and for being coupled to the end of the first chain when it is arranged on the support in a connecting position, and fixing means configured for coupling the shackle and the end of the first chain, the shackle comprising a first side wall with a first hole and a second side wall with a second hole, said side walls and said holes being arranged facing one another, the end of the first chain being arranged between the holes of the side walls in the connecting position, and the fixing means comprising a connector configured for going through, when the shackle is arranged in the connecting position, said end of the first chain from the hole of the first side wall, being housed thereafter in the hole of the second side wall, the fixing means comprising closure means configured for blocking the connector on the second side wall.

### DISCLOSURE OF THE INVENTION

The object of the invention is to provide an assembly for the quick connection-disconnection of a first chain and a second chain vertically underwater, and a method for quick connection and a method for quick disconnection implemented with said assembly, as defined in the claims.

An aspect of the invention relates to an assembly for the quick connection-disconnection of a first chain and a second chain vertically under water, comprising a support arranged under water supporting an end of the first chain, an H-shaped shackle in which one end of the second chain is coupled, the shackle being configured for being introduced under water together with the end of the second chain and for being coupled to the end of the first chain when it is arranged on the support in a connecting position, and fixing means configured for coupling the shackle and the end of the first chain, the shackle comprising a first side wall with a first hole and a second side wall with a second hole, said side walls and said holes being arranged facing one another, the end of the first chain being arranged between the holes of the side walls in the connecting position, and the fixing means comprising a connector configured for going through, when the shackle is arranged in the connecting position, said end of the first chain from the hole of the first side wall, being housed thereafter in the hole of the second side wall, the fixing means comprising closure means configured for blocking the connector on the second side wall.

The fixing means of the assembly are incorporated in the shackle and transported by said shackle.

Another aspect of the invention relates to a method for the quick connection of a first chain and a second chain vertically under water, which is implemented with a mooring assembly as defined above.

Yet another aspect of the invention relates to a method for the quick disconnection of a first chain and a second chain vertically under water, which is implemented with a mooring assembly as defined above

In the mooring assembly of the prior art, the fixing means are housed in connection and locking units which are coupled and fixed by means of attachment elements on the outside of the side walls of the shackle, and are fixed to the support with other attachment elements. This means that, before introducing the H-shaped shackle in the water, all the required attachments of the connection and closure units with the shackle must first be made on the surface, and when it is introduced in the water and before being coupled to the end of the first chain, attachments of the connection and locking units with the support must be made. Then, when the connection of the first and second chains has been made and before extracting the chains from the support, it is necessary to at least remove the attachment elements attaching the connection and locking units with the support, and it may also be necessary to remove the connection and locking units from the coupling thereof with the shackle for future uses.

In the assembly for the quick connection-disconnection of a first chain and a second chain vertically under water of the invention, the fixing means are directly incorporated in the shackle and transported by said shackle for coupling with the end of the first chain, such that the subsequent coupling, fixing, or later uncoupling of the attachment elements between the connection and locking units and the shackle is not required because they do not exist. Once the first and second chains have been connected, it is also not necessary to remove any attachment element with the support because they do not exist either. The assembly therefore comprises a smaller number of parts, has a lower cost, and allows greater speed in terms of the total time required for the connection and disconnection of the first chain and the second chain.

These and other advantages and features of the invention will become evident in view of the drawings and detailed description of the invention.

### DESCRIPTION OF THE DRAWINGS

Figure 1 shows a front perspective view of a first embodiment of the assembly for the quick connection-disconnection of a first chain and a second chain vertically under water of the invention, with the first and second chains being connected.
Figure 2 shows a rear perspective view of the assembly of Figure 1, with the first and second chains being connected.
Figure 3 shows a perspective view of the support of the assembly of Figure 1.
Figure 4 shows a perspective view of the H-shaped shackle of the assembly of Figure 1, with the fixing means incorporated to the shackle, the connector of the fixing means going through the holes of the side walls of the shackle, and the closure means of the fixing means blocking the connector.
Figure 5 shows a perspective view of a second Y-shaped shackle of the assembly of Figure 1, as the end of the first chain.
Figure 6 shows a front perspective view of a second embodiment of the assembly of the invention in which the end of the first chain is the last link of said first chain, the shackle of the second chain being oriented towards the support of the assembly.
Figure 7 shows a perspective view of the connector and the lock of the fixing means.
Figure 8 shows a perspective view of the fixing means, with the lock in the final position blocking the connector and the pin in the blocking position blocking the lock.
Figures 9-14 show the steps of an embodiment of a method of connecting the first chain and the second chain vertically underwater.

### DETAILED DISCLOSURE OF THE INVENTION

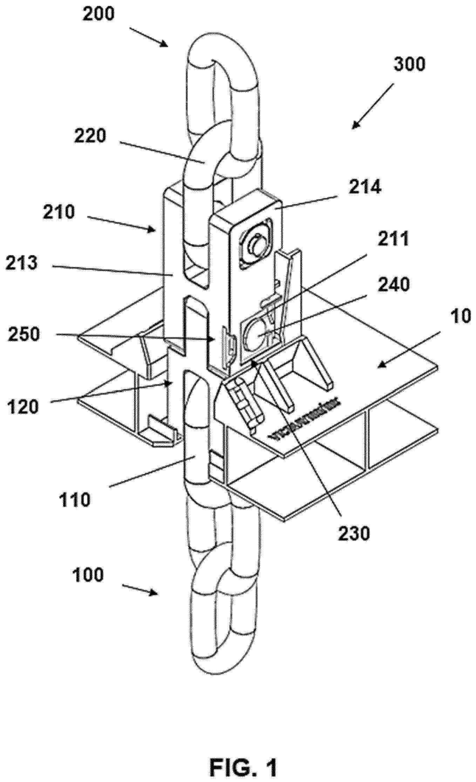

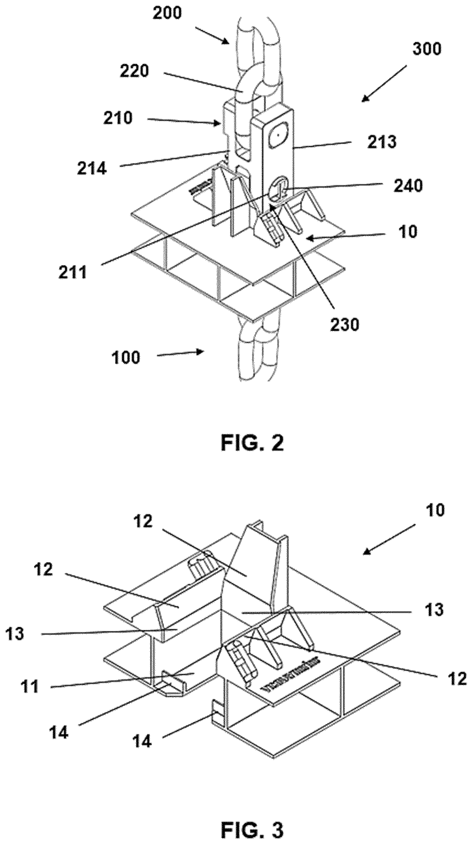

Figures 1 and 2 show a front perspective view and a rear perspective view of a first embodiment of the assembly 300 for the quick connection-disconnection of a first chain 100 and a second chain 200 vertically under water of the invention, the first and second chains 100 and 200 being connected. The first chain 100 and the second chain 200 are shown partially and only in the segment in which they will be connected. Segments that are not shown are attached, for example, in the first chain 100, to an anchor or pile fixed in the bottom of the sea, and the ends of the first and second chains 100 and 200 shown are those that will be used to make connection. In the second chain 200, the segment that is not shown is attached to a ship or platform, and the segment shown is the end of said second chain 200 that will be connected to the end of the first chain 100, the second chain 200 incorporating at said end an H-shaped shackle. Connection inside the water allows, for example, installing beforehand the anchor or pile in the bottom of the sea with the first chain 100 incorporated, and then when there is a need to install the ship or platform in a specific location on the sea surface, a second chain 200 is launched from said ship or platform for connection with the first chain 100.

Figures 3 to 5 and 7 and 8 show views of different components of the assembly 300. This assembly 300 comprises a support 10 which is arranged under water, with an end of the first chain 100 being supported on the support 10. It also comprises an H-shaped shackle 210 coupled to one end of the second chain 200, the shackle 210 being configured for being introduced under water together with the end of the second chain 200, and for being coupled to the end of the first chain 100 when it is arranged on the support 10 in a connecting position. The assembly 300 comprises fixing means 230 configured for coupling the shackle 210 and the end of the first chain 100, the shackle 210 comprising a first side wall 213 with a first hole 211 and a second side wall 214 with a second hole 212, said side walls 213 and 214 and said holes 211 and 212 being arranged facing one another, with the end of the first chain 100 being arranged between the holes 211 and 212 of the side walls 213 and 214 in the connecting position of the shackle 210.

The fixing means 230 comprise a connector 240, which is preferably a bolt, configured for going through, when the shackle 210 is arranged in the connecting position, the end of the first chain 100 from the hole 211 of the first side wall 213, being housed thereafter in the second hole 212 of the second side wall 214. The fixing means 230 also comprise closure means 250 configured for blocking the connector 240 in the second side wall 214. The fixing means 230 are incorporated in the shackle 210 and transported by said shackle 210 when it is introduced under water and moved towards the support 10 for being coupled to the end of the first chain 100, without having to use any other type of connection means or closure means which are externally coupled to the shackle 210 and externally incorporate the connector 240 and closure means 250.

The support 10 is a metallic platform formed by plates basically arranged in horizontal and vertical directions. One of said plates of the support 10 is a base 11 which allows supporting the end of the first chain 100. The support 10 also comprises guide means 220 which are formed by side and rear inclined walls 12, side and rear vertical walls 13 associated with the inclined walls 12, and stops 14 arranged vertically in the front part of the base 11. These walls are configured in the plates of the support 10. The support 10 has an open front, and the base 11 is partially open so that the end of the first chain 100 can go through said opening. The guide means 220 thus configured allow positioning the shackle 210 when the second chain 200 is lowered into the water towards the support 10. When the shackle 210 reaches the support 10, and with the help of an ROV, it is guided by the inclined walls 12 and the vertical walls 13 until the lower part of the first side wall and of the second side wall 213 and 214 are supported on the base 11. The stops 14 allow adjusting the position of the shackle 210 on the support 10 since said first side wall and second side wall 213 and 214 fit between said stops 14 and the rear vertical wall 13.

The support 10 allows the vertical connection and disconnection of the first chain 100 and the second chain 200 under water. If said support 10 has sufficient height, or is fixed on a platform supported in the bottom of the sea, or fixed to the end of a pile which is driven into the bottom of the sea, it allows arranging the end of the first chain 100 vertically on the support 10, and when the shackle 210 coupled to the end of the second chain 200 is coupled to the end of the first chain 100, it is also arranged vertically.

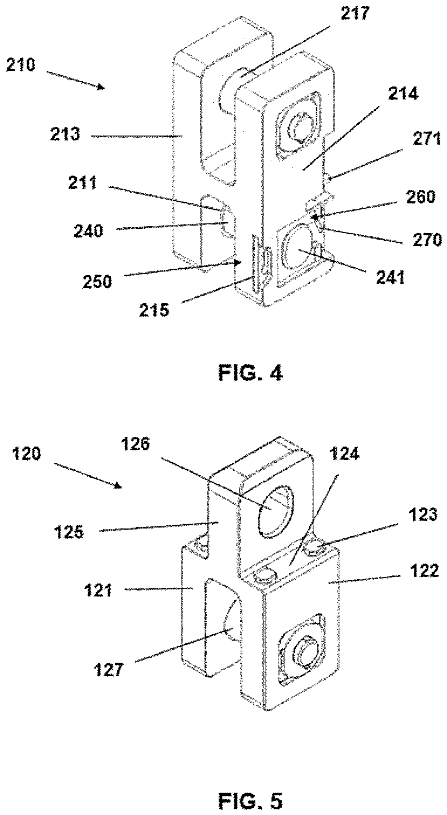

The shackle 210, as shown in Figure 4, also comprises a second bolt 217 which is arranged in the cavity of the upper part of said shackle 210, between the first side wall and the second side wall 213 and 214. This second bolt 217 is fixed in the shackle 210 outside the water, on the surface of the ship or platform from which the second chain 200 is launched into the water, and allows the end of the second chain 200 to be coupled to the shackle 210 through a last link.

In this first embodiment of the assembly 300, the end of the first chain 100 is a second Y-shaped shackle 120 connected to an end of the first chain 100. This second shackle 120 is shown in Figure 5 and comprises two arms 121 and 122 the lower part of which is supported on the base 11 of the support 10, when the end of the first chain 100 is supported on the support 10. In that situation, the lower part of the first side wall and the second side wall 213 and 214 of the shackle 210 is supported on the upper part of the arms 121 and 122 of the second shackle 120. The second shackle 120 comprises a plurality of projections or lugs 123 on a surface 124 of the upper part of the arms 121 and 122, this plurality of projections or lugs forms guiding and positioning means for supporting shackle 210 on the second shackle 120, the surface of the lower part of the first side wall and the second side wall 213 and 214 of the shackle 210 comprising cavities (not shown in the drawings) housing the projections 123 of the second shackle 120.

Since it has a Y shape, the second shackle 120 comprises a protruding arm 125 which protrudes from the position of the surface 124 of the second shackle 120, said protruding arm 125 comprising a hole 126 going through it. When the end of the first chain 100 is supported on the support 10 and the shackle 210 is arranged in the connecting position with the help of the support 10 supported on the second shackle 120, the protruding arm 125 of the second shackle 120 is positioned in the lower cavity of the shackle 210, between holes 211 and 212 of the first side wall and the second side wall 213 and 214. To connect the first chain 100 and the second chain 200, the connector 240 goes through the first hole 211 of the first side wall 213 of the shackle 210, the hole 126 of the second shackle 120, and the second hole 212 of the second side wall 214 of the shackle 210, such that the connector 240 connects the shackle 210 and the second shackle 120.

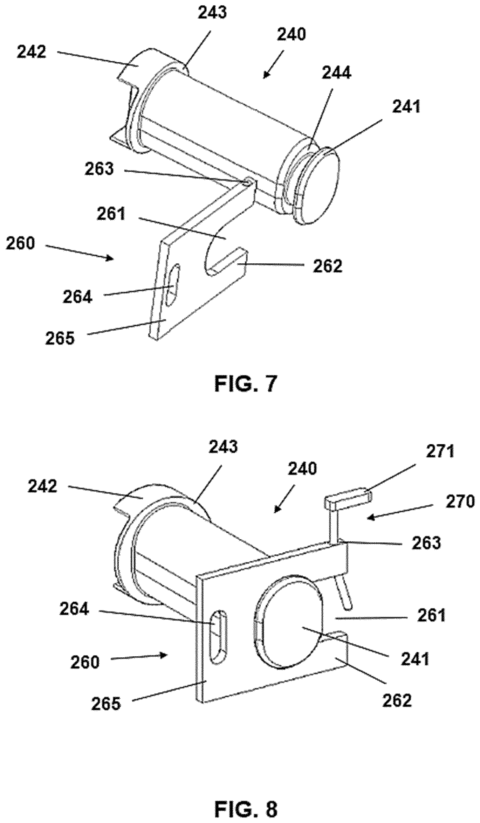

As shown in Figures 7 and 8, the closure means 250 comprise a lock 260 linearly movable between an initial position and a final position, the lock 260 being in the form of a rectangular plate in this embodiment. The lock 260 is arranged in a groove 215 which is arranged on a side of the lower part of the second side wall 214 of the shackle 210. This groove 215 runs along the second side wall 214, and when the second chain 200 is introduced in the water towards the support 10, the lock 260 is in the initial position with only one end 262 introduced in the groove 215, and leaving the passage in the second hole 212 of the second side wall 214 free. When the shackle 210 is arranged in the connecting position on the support 10 being coupled to the end of the first chain 100, the connector 240 is moved to go through the hole 211 of the shackle 210, the hole 126 of the second shackle 120, and the hole 212 of the shackle 210, with an end 241 of the connector 240 projecting from the second hole 212, the lock 260 blocking the end 241 of the connector 240 when said lock 260 is moved to the final position.

The lock 260 is a plate comprising at the end 262 an opening 261 having in the inlet a rectangular shape and at the end a semicircular shape. The opening 261 of the lock 260 is oriented towards the side surface of the connector 240 when said connector 240 is going through the shackle 210 and the second shackle 120, the end 241 of said connector 240 projecting from the second hole 212 of the second side wall 214. Upon positioning the lock 260 in the final position by moving it along the groove 215, the opening 261 surrounds the end 241 of the connector 240 until the final semicircular part of the opening 261 is supported on the cylindrical body of the connector 240. To enable transitioning the lock 260 from the initial position to the final position, and vice versa, said lock 260 comprises a grip 264 at a second end 265, opposite the end 262, which allows moving the lock 260 into the groove 215 of the shackle 210 by means of a remotely operated vehicle (ROV).

The end 241 of the connector 240 comprises a recess or groove 244 which in this embodiment of the assembly 300 is a perimetral recess or groove surrounding the cylindrical body. When the connector 240 is transported with the shackle 210, it is housed partially in the first hole 211 of the first side wall 213 of the shackle 210, with a central and rear part arranged outside the shackle 210, leaving the passage in the second hole 212 of the second side wall 214 free, and leaving the hole 126 of the second shackle 120 free. The connector 240, which in this embodiment is a bolt, comprises a second end 242, opposite the end 241, comprising a perimetral flange 243 in the first segment surrounding the cylindrical body. When the connector 240 is transported under water to the support 10, the second end 242 is arranged away from the shackle 210. In that situation, the closure means 250 are also transported with the shackle 210 and partially housed in the second side wall 214 of the shackle 210, with the end 262 of the lock 260 housed in the groove 215 of the second side wall 214.

When the connector 240 is going through the holes 211 and 212 of the shackle 210 and the hole 126 of the second shackle 120, and the lock 260 is then moved to the final position, the opening 261 is therefore housed in the recess 244 of the connector 240, said lock 260 thereby blocking the backward movement of the connector 240. In that situation, the stop of the flange 243, which provides passage to the central body of the connector 240 abuts with the first side wall 213 of the shackle 210.

To assure blocking of the connector 240 by means of the lock 260, the closure means 250 comprise a cotter pin or pin 270 linearly movable between an unblocking position and a blocking position. The cotter pin 270 is also incorporated in the shackle 210 when the second chain 200 is submerged into water and moved towards the support 10, being incorporated in the second side wall 214 of the shackle 210. The cotter pin 270 is arranged in a vertical groove 216 on a side of the second side wall 214 of the shackle 210, at the end opposite where the groove 215 of the lock 260 is arranged, and above the groove 215. In the unblocking position, the cotter pin 270 is completely arranged inside the groove 216 and comprises a grip 271 which protrudes from the groove 216 and allows moving the cotter pin 270. The lock 260 comprises a vertical hole 263 going through the end 262 which borders the opening 261. The cotter pin is moved to the blocking position along the groove 216 with the help of an ROV, said cotter pin 270 being housed in the hole 263 of the lock 260 when said lock 260 is in the final position, blocking the connection between the first chain 100 and the second chain 200 when the connector 240 is furthermore coupling the shackle 210 and the second shackle 120, blocked by the lock 260. To further assure said blocking, and with the help of the ROV, the end of the cotter pin 270 protruding from the hole 263 of the lock 260 is bent.

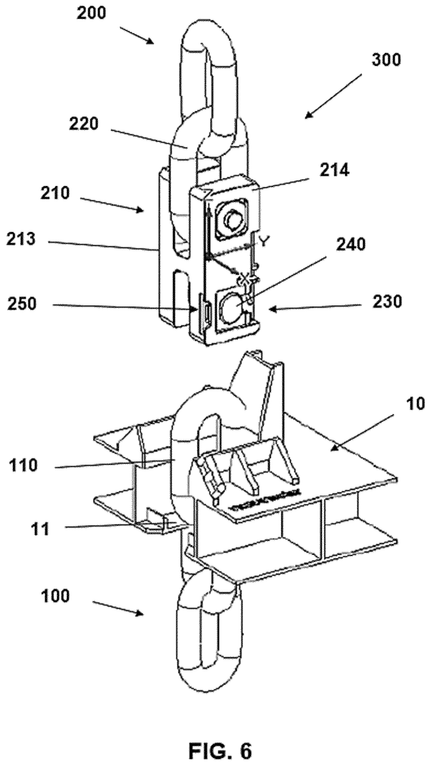

In a second embodiment of the assembly 300 of the invention shown in Figure 6, the end of the first chain 100, instead of being a shackle, is the last link 110 of said first chain 100. To connect the shackle 210 of the second chain 200 with this link 110, the base 11 of the support 10 comprises an opening with a shape (not shown in the drawings) that allows the vertical support of the last link 110, for example, a cruciform form. The lower part of the first side wall 213 and of the second side wall 214 of the shackle 210 is supported on the base 11 of the support 10, the last link 110 is arranged in the lower cavity of the shackle 210, the connector 240 being connected with the last link 110 when it is going through the holes 211 and 212 of the side walls 213 and 214.

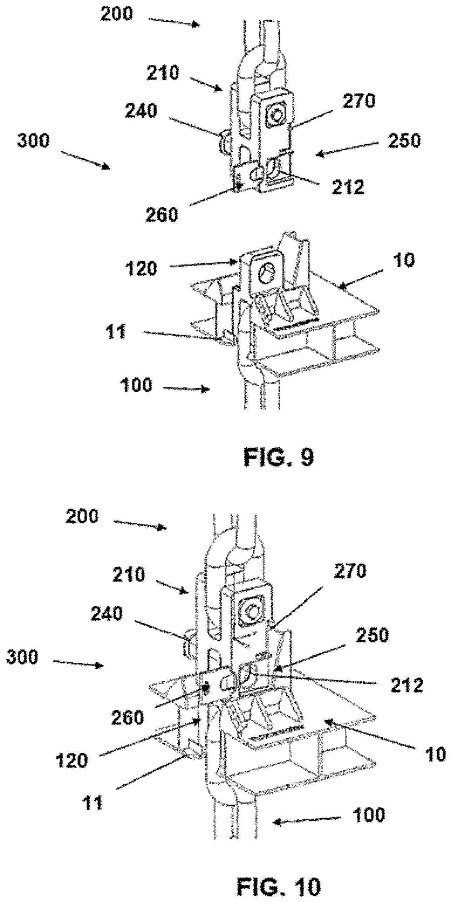

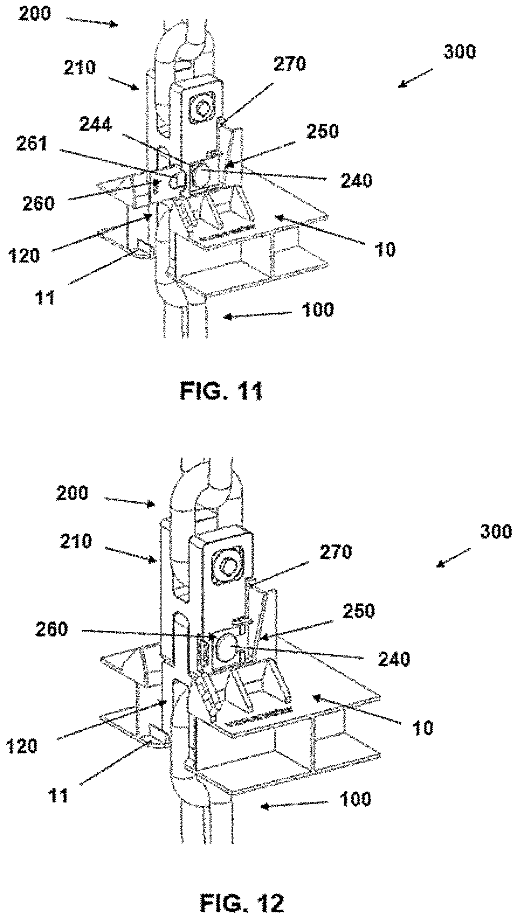

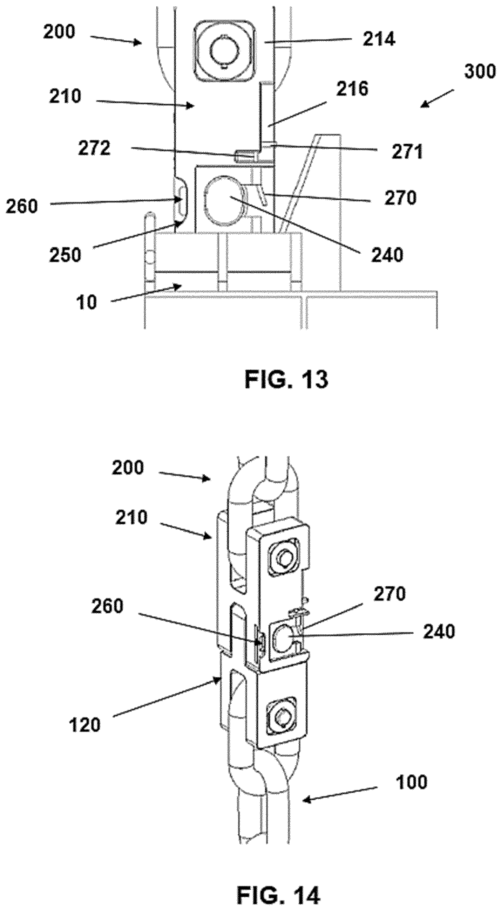

The method for the quick connection of a first chain 100 and a second chain 200 vertically under water is implemented with an assembly 300 as defined above. Figures 9-14 show the steps for performing the method for the quick connection of a first chain 100 and a second chain 200 vertically underwater. Said method comprises:
- a step of arranging the end of the first chain 100 on the support 10,
- a step of introducing the shackle 210 under water, together with the end of the second chain 200 and together with the incorporated fixing means 230, toward the support 10,
- a step of positioning the shackle 210 on the support 10, in which the end of the first chain 100 is arranged between the holes 211 and 212 of the side walls 213 and 214 of the shackle 210,
- a step of coupling in which the connector 240 is moved through the end of the first chain 100, being introduced in the hole 212 of the second side wall 214 of the shackle 210,
- a step of fixing in which the closure means 250 are acted on to block the connector 240 in the second side wall 214, and
- a step of releasing the first chain 100 and the second chain 200 that are connected together, in which the second chain 200 is pulled, releasing the first chain 100 and the second chain 200 that are connected together from the support 10.

A method for the quick disconnection of a first chain 100 and a second chain 200 vertically under water is also implemented with an assembly 300 as defined above. The method is implemented after applying the method of quick connection described above, and is used for example when there is a need to replace one of the links of the first chain 100 and/or of the second chain 200 or when there is a need to replace the entire first chain 100 and/or second chain 200. The method comprises the following steps:
- a step of disconnecting in which the closure means 250 are acted on to unblock the connector 240 with respect to the second side wall 214,
- a step of decoupling in which the connector 240 is moved, taking it out of the second hole 212 of the second side wall 214 of the shackle 210 and of the end of the first chain 100, and
- a step of extracting in which the shackle 210 together with the end of the second chain 200 and together with the fixing means 230 is extracted from the water.

## Claims

1. Assembly for the quick connection-disconnection of a first chain (100) and a second chain (200) vertically under water, the assembly (300) comprising a support (10) arranged under water supporting an end of the first chain (100), an H-shaped shackle (210) in which one end of the second chain (200) is coupled, the shackle (210) being configured for being introduced under water together with the end of the second chain (200) and for being coupled to the end of the first chain (100) when it is arranged on the support (10) in a connecting position, and fixing means (230) configured for coupling the shackle (210) and the end of the first chain (100), the shackle (210) comprising a first side wall (213) with a first hole (211) and a second side wall (214) with a second hole (212), said side walls (213, 214) and said holes (211, 212) being arranged facing one another, with the end of the first chain (100) being arranged between the holes (211, 212) of the side walls (213, 214) in the connecting position, and the fixing means (230) comprising a connector (240) configured for going through, when the shackle (210) is arranged in the connecting position, said end of the first chain (100) from the hole (211) of the first side wall (213), being housed thereafter in the hole (212) of the second side wall (214), the fixing means (230) comprising closure means (250) configured for blocking the connector (240) in the second side wall (214), **characterized in that** the fixing means (230) are incorporated in the shackle (210) and transported by said shackle (230).

2. Assembly according to claim 1, wherein the connector (240) is transported housed in the hole (211) of the first side wall (213) of the shackle (210) and the closure means (250) are transported housed in the second side wall (214) of the shackle (210).

3. Assembly according to claim 2, wherein the closure means (250) comprise a lock (260) linearly movable between an initial position and a final position, the lock (260) being arranged in a groove (215) arranged in the second side wall (214) of the shackle (210), with the lock (260) blocking the connector (240) in the second side wall (214), when it is in the final position.

4. Assembly according to claim 3, wherein the lock (260) is a plate comprising at one end (262) an opening (261), the opening (261) of the lock (260) being oriented towards the side surface of the connector (240), the opening (261) surrounding an end (241) of the connector (240), and said lock (260) blocking the backward movement of the connector (240).

5. Assembly according to claim 4, wherein the end (241) of the connector (240) comprises a perimetral recess (244), the connector (240) being arranged housed in the second hole (212) of the second side wall (214), with the end (241) projecting from said second side wall (214), when the connector (240) is in the connecting position, the opening (261) of the lock (260) being housed, when it is in the final position, in the recess (244) of the connector (240).

6. Assembly according to claim 4 or 5, wherein the connector (240) comprises a second end (242) opposite the end (241), comprising a perimetral flange (243), the flange (243) abutting with the first side wall (213) of the shackle (210) when the connector (240) is in the connecting position.

7. Assembly according to any of claims 4 to 6, wherein the lock (260) comprises a grip (264) at a second end (265), opposite the end (262), which allows moving the lock (260) into the groove (215) of the shackle (210) by means of a remotely operated vehicle (ROV).

8. Assembly according to any of claims 4 to 7, wherein the closure means (250) comprise a pin (270) linearly movable between an unblocking position and a blocking position, the pin (270) being arranged in the second side wall (214) of the shackle (210), said pin (270), when it is in the blocking position, blocking the lock (260) when it is in the final position.

9. Assembly according to claim 8, wherein the pin (270) is arranged in a vertical groove (216) of the second side wall (214) of the shackle (210), the lock (260) comprising a vertical hole (263) going through the end (262) which borders the opening (261), the pin (270) being housed in the hole (263) of the lock (260) when it is in the blocking position.

10. Assembly according to claim 9, wherein the pin (270) comprises a grip (271) which allows moving said pin (270) along the groove (216) of the shackle (210) by means of a remotely operated vehicle (ROV).

11. Assembly according to any of the preceding claims, wherein the end of the first chain (100) is a second Y-shaped shackle (120) connected to an end of the first chain (100), two arms (121, 122) of the second shackle (120) being supported on a base (11) of the support (10), and the second shackle (120) comprising a protruding arm (125) comprising a hole (126), the connector (240) going through said hole (126) when the shackle (210) is arranged in the connecting position.

12. Assembly according to any of claims 1 to 10, wherein the end of the first chain (100) is the last link (110) of said first chain (100), said last link (110) being vertically supported on a base (11) of the support (10), and the shackle (210) being supported on the base (11) of the support (10), the connector (240) being connected with the last link (110) when it is in the connecting position.

13. Method for the quick connection of a first chain (100) and a second chain (200) with an assembly (300) according to any of the preceding claims, **characterized in that** it comprises a step of introducing the shackle (210) under water together with the end of the second chain (200) and together with the fixing means (230), a step of positioning the shackle (210) on the support (10) in which the end of the first chain (100) is arranged between the holes (211, 212) of the side walls (213, 214) of the shackle (210), a step of coupling in which the connector (240) is moved through the end of the first chain (100) and introduced in the hole (212) of the second side wall (214) of the shackle (210), and a step of fixing in which the closure means (250) are acted on to block the connector (240) in the second side wall (214).

14. Method for the quick disconnection of a first chain (100) and a second chain (200) with an assembly (300) according to any of the preceding claims, **characterized in that** it comprises a step of releasing in which the closure means (250) are acted on to unblock the connector (240) with respect to the second side wall (214), a step of decoupling in which the connector (240) is moved, taking it out of the hole (212) of the second side wall (214) of the shackle (210) and of the end of the first chain (100), and a step of extracting in which the shackle (210) together with the end of the second chain (200) and together with the fixing means (230) is extracted from the water.
